# EUROPEAN PATENT APPLICATION

(11) **EP 0 576 291 A2**
(43) Date of publication of application: **29.12.1993**
(21) Application number: 93304970.2
(22) Date of filing: 24.06.1993
(51) Int. Cl.: G01N 35/02, G01N 33/53

(54) **Automated clinical analyzer with temperature control**

(30) Priority: 26.06.1992 US 904773
(71) Applicant: BIO-RAD LABORATORIES, INC., Hercules California 94547 (US)
(72) Inventor: Macko, Christopher, Martinez, California 94553 (US); Flory, Donald R., Berkeley, California 94707 (US); Sinderson, Mark P., San Francisco, California 94112 (US); Honig, Jordan S., San Francisco 94110 (US)
(74) Representative: West, Alan Harry

(57) **Abstract**

An automated instrument for performing a multitude of clinical assays is disclosed. Receptacles for assay reagents and patient samples, controls and standards are supported on one carousel (32), and multi-well reaction vessels (34) are supported on another (31), the two carousels sharing a common axis (14) but driven by independently operating drive mechanisms (21,22;23,24). The reaction vessel carousel (31) is surrounded by a temperature controlled shell (33) which monitors and controls the temperature of all reaction vessels on the carousel. The two carousels rotate in a programmed manner to bring the various receptacles and vessels in alignment with various workstations which contain elements such as wash tubes, liquid transfer tubes, and detection systems, in a sequence which is governed by a programmed controller.

## Description

This invention lies in the field of analytical instruments and automated liquid sampling and handling devices. This invention is applicable to the performance of clinical diagnostics, including immunodiagnostics and other clinical analytical procedures which involve multiple samples, repetitive protocols and precision in measuring and transferring liquids.

Immunoassays and similar diagnostic procedures are of major importance in areas such as health care and clinical research. The frequency with which such procedures are performed on a routine basis by clinical laboratories continues to grow as the procedures increasingly gain acceptance and as new assays and protocols are developed. With the emergence of automated analyzers, the cost of performing these procedures has dropped while efficiency and reliability have improved.

The typical clinical assay requires a considerable number of reagents and manipulations. The equipment needed to perform these manipulations includes solid phase materials such as sample vials, microwells, membranes or beads, plus reservoirs for the various reagents used, and transfer devices such as spray nozzles and dispensing and aspirating pipets. To handle the equipment and reagents and perform the necessary manipulations, automated analyzers generally include several workstations plus a number of carriages or other such conveying structures which move the vessels and pipetting tubes in different directions, often involving all three orthogonal axes. With all this travel, there is often a risk of misaligned or malfunctioning parts and difficulty in maintaining temperature control. Furthermore, with the need to accommodate so many different components moving in different directions, the instrument is frequently of awkward or sprawling construction, consuming valuable laboratory bench space. Attempts to streamline the instrument in terms of construction, shape and internal movement generally result in compromises either in the number of samples which can be loaded simultaneously for analysis or in the versatility of the instrument in terms of the types of protocol which it can perform.

These and other problems encountered in the design and construction of automated analyzers are addressed by the present invention, which resides in a novel automated analyzer which accommodates a multitude of samples with a reduced number of moving parts while maintaining temperature control of the chemical reactions. Included among the features of the analyzer are two carousels mounted for rotation about a common vertical axis, one to support receptacles for the assay reagents, patient samples, controls and standards, and the other to support multi-well reaction vessels in which the assay reactions are performed, and a temperature controlled shell surrounding the reaction vessel carousel. The rotation of the two carousels is governed by an independent drive mechanism for each carousel, and the actions of the two drive mechanisms are coordinated with the actions of automated liquid transfer pipets, well washing devices, and detection units, all included as part of the analyzer, to perform a complete assay protocol. Substantially all motions of the instrument parts are along the axial direction (referred to herein for convenience as the "*z*" direction or coordinate), radial directions (referred to collectively herein for convenience as the "*r*" direction or coordinate), and the angular *(i.e.,* rotational) direction (referred to herein for convenience as the "*ϑ*" direction or coordinate), all as defined by the orientation of the carousels. Workstations for the various stages of an assay protocol are positioned at various locations along the *ϑ* direction, permitting transfer and handling of liquid materials and other system components within limited paths of travel along the three coordinates.

In preferred embodiments of the invention, the two carousels are of approximately the same diameter, and while the remaining instrument parts are above and below the carousels, the travel of these parts remains substantially within the perimeters of the carousels, thereby providing the instrument with economy of space. The restriction of motion to the *z*, *ϑ* and *r* coordinates makes it easier to achieve and maintain proper alignment among the receptacles, transfer tubes and other parts of the instrument. The system still however retains the capacity to handle a large number of samples, reagents and reaction vessels. The invention thus provides an automated analyzer which is spatially compact and operationally reliable and yet has high capacity, high throughput and versatility.

The placement of the reaction vessels on a separate carousel permits a large number of such vessels to be retained in a common plane. This eliminates the need for a separate storage location in the instrument for vessels awaiting their turn for analysis, and for any automated means of removing vessels from storage and returning them to storage once the analysis is complete. Retention of the reaction vessels in a carousel also permits one to construct a temperature controlled shell with a flat planar region of temperature control inside which the reaction vessels can freely move, thereby imposing close and uniform temperature control over all such vessels at the same time.

In preferred embodiments of the invention, automated pipets for aliquot transfer and initial temperature control, well washing and well aspiration are all positioned above both carousels at fixed angular positions along the rotation path. These pipets contain drive mechanisms which move the pipets in the *z* direction, and in some cases, the *r* direction as well, and access openings for these pipets are provided in both the upper carousel and the temperature controlled shell so that transfers can be made between the two carousels. The temperature controlled shell in preferred embodiments further contains an opening along its peripheral edge to permit reaction vessels to be inserted into or removed from the reaction vessel carousel without removing the carousel from the shell.

These are some of the many features of this invention and its preferred embodiments. Further features, embodiments and advantages will be apparent from the description in succeeding sections of this specification.

The analyzer of the present invention is useful in the performance of clinical assays in a wide variety of plates or other vessels serving as reaction vessels. The invention is of particular interest for use in performing analyses in conventional, commercially available multi-well vessels such as microtiter well strips.

FIG. **1** is a top plan view of an automated clinial analyzer in accordance with the present invention, with the instrument cover and certain parts removed to show the placement of other parts.

FIG. **2** is a top plan view of the two carousels and the temperature controlled shell of the analyzer shown in FIG. **1**, with portions broken away to show features of all three components.

FIG. **3** is a vertical cross section of the two carousels and the temperature controlled shell taken along the line 3-3 of FIG. **2**, also showing the drive mechanisms for the carousels.

FIGS. **4A** and **4B** are top and vertical cross section views, respectively, of a portion of the reaction vessel carousel with a cassette for holding microtiter well strips. The cross section of FIG. **4B** is taken along the line B-B of FIG. **4A**.

FIG. **5** is a perspective view of a portion of the temperature controlled shell.

FIG. **6** is a top view of the temperature controlled shell with a portion of the upper plate of the shell broken away to show the interior.

The concepts, functions and operation of the invention may be understood by a detailed examination of a specific example of an automated clinical analyzer embodying the invention, even though it will be understood that this is but one example within the scope of the invention. The Figures attached hereto depict one such example.

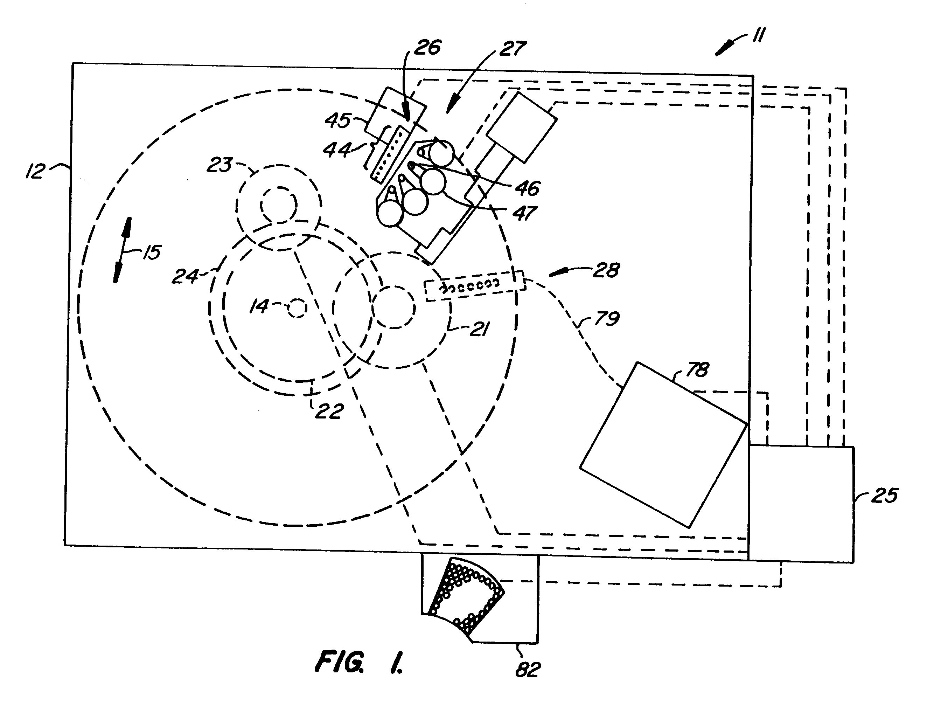

The plan view of FIG. **1** shows those internal parts of the analyzer **11** which are controlled by programming. The parts are contained in a housing **12** whose lid (not shown) has been removed. The structure and arrangement of the parts are based on the two carousels of similar diameter. Since one carousel is superimposed over the other, both carousels are represented in this Figure by a common perimeter **13**, shown in dashed lines. The two carousels are mounted for rotation about a common post or axle **14**, and the direction of rotation of each carousel is shown by the arrow **15**. The *z* direction referred to above is any linear direction perpendicular to the plane of the Figure, as exemplified by the axle **14** at the center axis of the two carousels; the *ϑ* direction is the direction of angular rotation shown by the arrow **15**; and the *r* direction is any linear radial direction passing through the center line of the central axis **14** and in a plane perpendicular to the center line.

The two carousels are both mounted parallel to the plane of the Figure, and each is driven independently of the other, with one drive motor **21** and drive gear **22** for the assay reagent carousel, and a second drive motor **23** and drive gear **24** for the reaction vessel carousel, all shown in dashed lines. High precision servo motors or equivalent units may be used as the drive motors, and precision gears or other equivalent devices may used, as will be readily apparent to those skilled in the art.

Each of the two drive motors **21**, **23** is activated by a control unit **25** which includes a power supply individually directed to the drive motors as well as to other elements of the analyzer, as discussed below. The control unit is programmable to activate the drive motors in predetermined sequences and for predetermined time intervals, and to coordinate the drive motors with other functional units of the analyzer as part of an overall scheme including all timing and sequencing functions necessary for the performance of an assay.

The function of the drive motors **21**, **23** is to individually rotate the two carousels to place the reagent receptacles and the reaction vessels in coaxial alignment with the functional units which are located at workstations at fixed angular positions along the path of rotation. The functional units at the various workstations in the example shown in FIG. **1** include a wash station **26**, a liquid transfer station **27**, and a detection block **28**. The wash station **26** dispenses wash solution to the wells of the reaction vessel located immediately below it, and also aspirates the well contents, using appropriate tubing for connections to reservoirs from which the wash solution is drawn and to waste receptacles for the disposal of aspirated fluids. In preferred embodiments of the invention, all containers from which fluids are to be drawn will have their volume contents monitored prior to and during an assay for the purpose of insuring that adequate volumes are present to perform the required tests. At the liquid transfer station **27**, precisely measured amounts of test samples and assay reagents as required for a particular assay protocol are transferred between the various reagent receptacles on one carousel and the wells in the reaction vessel on the other carousel, as well as between wells within a single reaction vessel, if desired. The detection block **28** contains the necessary devices and instruments needed for any of the various detection techniques known for use in clinical assays, and thereby provides quantitative measurements of the assay results. The units at each of these three workstations and their operation are described in more detail below. These three workstations are sufficient for a wide variety of clinical assay protocols, although additional workstations may be included to serve further functions useful in clinical assays.

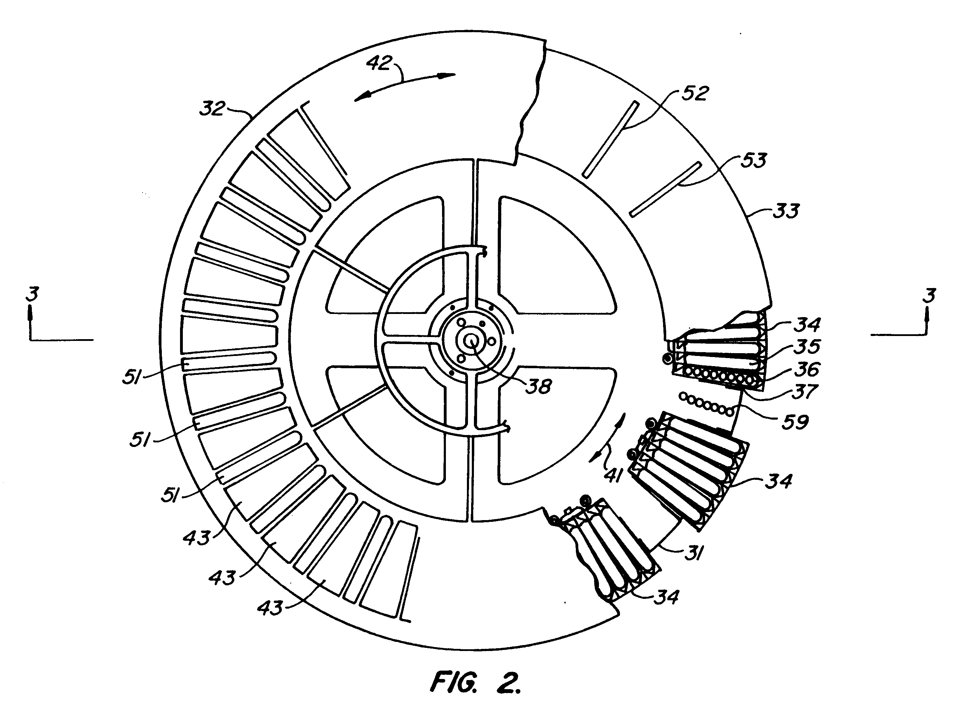

Turning next to FIG. **2**, the two carousels **31**, **32** are shown, together with the temperature controlled shell **33**, in partial cutaway to reveal the manner in which these components are assembled relative to each other. The view is from above, and the reaction vessel carousel **31** is positioned underneath the assay reagent carousel **32** in this embodiment, although in other embodiments the two may be reversed. Supported by the reaction vessel carousel are several multi-well reaction vessels **34**, occupying slots evenly spaced around the full circumference of the carousel. The particular carousel shown in this Figure accommodates twelve such vessels, although the number is not critical and may vary widely.

The multi-well reaction vessels **34** may be of any shape or configuration. Each vessel may for example be a single plate of wells selected from those of various sizes and configurations available on the market, or a single strip of wells such as a microtiter strip, again selected from those of the various commercially available sizes and configurations. Alternatively, the vessel may be a carrier, tray or cassette designed to retain one or more such plates or strips. The example shown in the Figure is a cassette with six slots **35**, each constructed to hold a single microtiter strip **36** such as those in wide use in clinical laboratories, each strip containing eight wells **37** arranged in a straight line. Only one such strip **36** is shown in the Figure. The cassette is shaped to hold each strip **36** in a fixed orientation with the strips arranged to radiate from a common center which is beyond the perimeter of the cassette. The carousel **31** holding the cassettes is designed such that with the cassettes in place, the common center of the individual well strips coincides with the carousel axis **38**. In this manner, all strips are arranged radially on the carousel.

For ease of reference, the term "reaction vessel" is used herein as a generic term to encompass various types of vessels in which assay reactions can take place. These include single-well and multiple-well structures; microtiter plates and microtiter strips; and carriers, trays and cassettes which contain multiple microtiter plates or strips. Regardless of the particular type of structure, the wells of the reaction vessel will contain the reaction mixtures, and in many cases will also serve as a solid phase for assay reactions which utilize both solid and liquid phases.

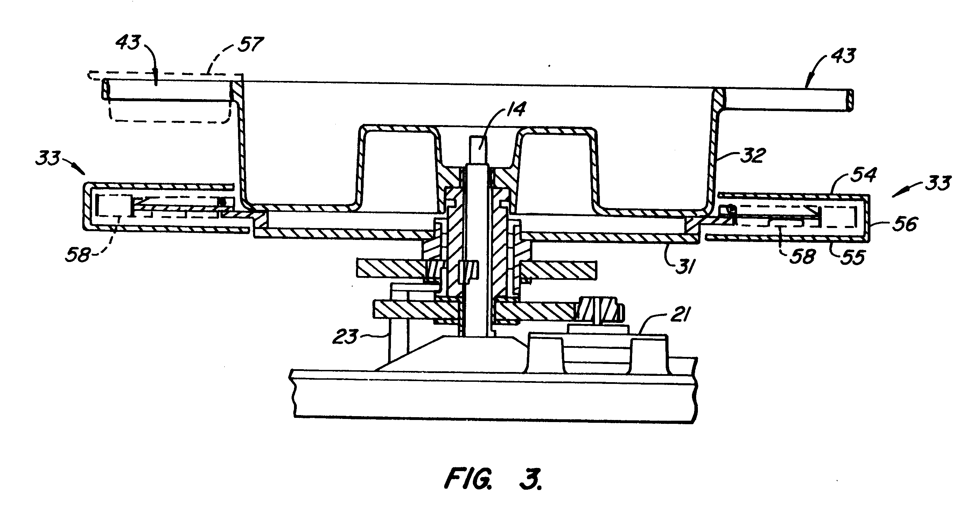

The reaction vessels **34** occupy a peripheral region or outer ring of the reaction vessel carousel **31**. This region is covered by the temperature controlled shell **33**. While the reaction vessel carousel **31** and the assay reagent carousel **32** each rotate, as indicated by the arrows **41**, **42**, the temperature controlled shell **33** remains stationary. The shell is a hollow circular tunnel, covering the top and bottom of the peripheral region which the reaction vessels **34** occupy on the carousel **31** and open at one side to form a U-shaped cross section with the opening toward the center axis **38** of the carousel. This is shown more clearly in FIG. **3**, discussed below. As the carousel **31** rotates, the reaction vessels **34** travel through the circular tunnel formed by the shell. Temperature control elements in the tunnel both monitor and control the temperature inside the tunnel.

The assay reagent carousel **32** is positioned above the temperature controlled shell **33**, and rotates independently of the reaction vessel carousel. Included in the assay reagent carousel are a series of trapezoidally shaped slots or loops **43** designed to support similarly shaped troughs which contain the reagents used in the assays, as well as an inner annular area which supports racks for holding a multitude of patient samples, controls and standards. A typical assay will require several such troughs, one for each of the various reagents used in the assay.

The microtiter strip wells in the reaction vessel carousel **31** and the reagent troughs in the assay reagent carousel **32** are all accessible from the top either by virtue of being uncovered or of being covered by septa or other barriers which are capable of being pierced by liquid transfer tubes or cannulae at the wash station **26** and the liquid transfer station **27** (FIG. **1**). These tubes are accordingly provided with individual mechanisms for motion in the *z* direction, permitting the cannulae to be lowered into and raised out of a well or trough. Referring to FIG. **1**, the tubes **44** at the wash station **26** are driven by a single drive mechanism **45**, and the tubes **46** at the liquid transfer station **27** are driven by individually controlled screw conveyors **47**. The tubes **46** at the liquid transfer station are also provided with the capability of motion in the *r* direction, which permits four tubes as shown to transfer between eight wells in a single radial strip.

To permit liquid transfer between the reagent troughs in the upper carousel **32** and the reaction vessels in the lower carousel **31**, the upper carousel contains radial slot-shaped openings **51** in between the reagent trough slots **43**, and the temperature controlled shell **33** contains radial slot-shaped openings **52**, **53** as well. Since the temperature controlled shell **33** does not rotate, the slots **52**, **53** are positioned at fixed angular positions corresponding to the positions of the wash station and the liquid transfer station, respectively, and are accordingly aligned in the *z* direction with the wash tubes and liquid transfer tubes which are poised above the carousels. To perform a washing of wells in the lower carousel **31**, the lower carousel is rotated so that the radial row of wells to be washed is also in alignment with the wash station slot **52**. The wash tubes are then lowered through the slot **52** into the wells. To perform a transfer of liquid from the upper carousel **32** to the lower **31**, the upper carousel is first rotated to place a trough in one of the trough slots **43** in alignment with the liquid transfer slot **53** in the temperature controlled shell, and the liquid transfer tubes are lowered into the trough to draw the liquid reagent. The tubes are then raised, and both carousels are rotated so that the wells into which the reagent is to be placed, and one of the open slots **51** of the upper carousel, are all in alignment with the liquid transfer slot **53**. Once the alignment is achieved, the liquid transfer tubes are lowered through the slots into the wells, and the reagent is expelled from the tubes into the wells.

The reaction vessel carousel **31** also contains rows of radially aligned holes **59**. One row is shown in FIG. **2**, and other similar rows are spaced around the carousel in between the locations of the reaction vessels **34**. These holes serve two functions. One function is to permit the detection block to obtain a zero reading. While a zero reading can be obtained at an empty reaction vessel location as well, these holes permit zero readings to be taken when each position on the carousel is occupied by a reaction vessel. The second function is to eject well wash liquids, particularly in cases where more than one wash liquid is used in an assay protocol and the wash tubes must be purged between wash liquids. For this purpose, the temperature controlled shell **33** will contain an opening on the bottom, and a catch basin and aspiration tubing will be placed below the temperature controlled shell.

A vertical cross section of the two carousels and the drive mechanisms is shown in FIG. **3**. As in FIG. **2**, the reaction vessel carousel **31** is below the assay reagent carousel **32**, and both are mounted to a common axle **14** for rotation. The drive motor **21** for the assay reagent carousel is shown in the foreground, and the drive motor **23** for the reaction vessel carousel is shown in the rear. The temperature controlled shell **33** covers the portion of the reaction vessel carousel **31** which holds the multi-well reaction vessels. The shell contains an upper plate **54**, a lower plate **55** and a peripheral wall **56**, and is mounted immovably to the housing **12** (FIG. **1**). The slots **43** in the assay reagent carousel **32** for the assay reagent troughs are also shown, and an assay reagent trough **57** is shown in dashed lines. Two multi-well reaction vessels **58** are also shown in dashed lines, held at positions along the periphery of the reaction vessel carousel **31**.

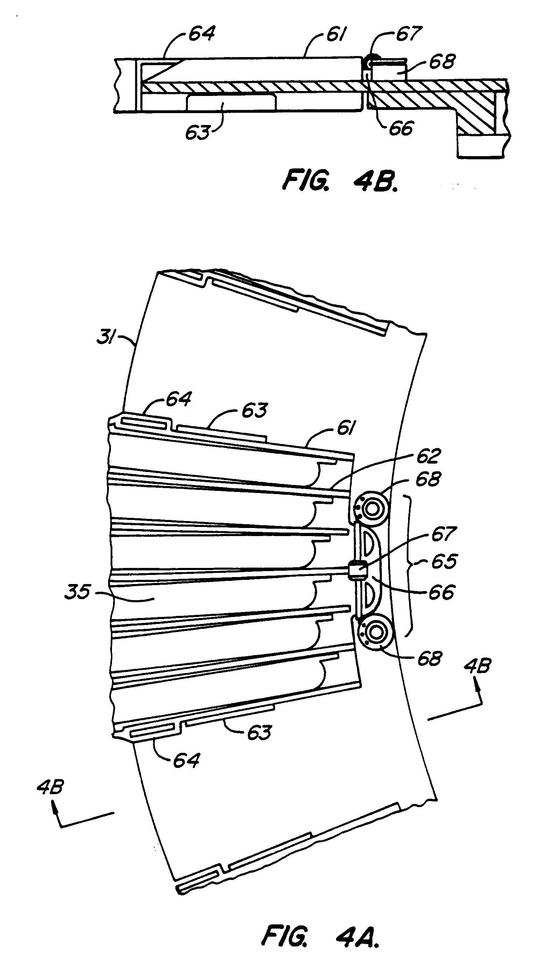

FIGS. **4A** and **4B** offer an enlarged view of a cassette **61** designed to serve as a support for six microtiter strips, mounted to the reaction vessel carousel **31**. The six slots **35** of the cassette are empty for purposes of clarity, and each is specifically shaped to receive and securely hold a standard eight-well microtiter strip. It is emphasized once again that this cassette and other elements of the system shown in these drawings are merely examples illustrating the invention, and that other shapes, sizes and configurations which embody the basic concepts may be used as well. Laterally protruding bars **63**, **64** along the sides of the cassette serve as guides for insertion of the cassette onto the carousel, and for holding the cassette in the plane of the carousel.

A roller and spring assembly **65** secures the inner end of the cassette to the carousel. A protruding tongue **66** on the inner end of the cassette engages a roller **67** on the carousel, the roller being mounted through springs **68** to provide the roller with a resilient character. The roller engages an indentation in the tongue (not shown) to produce a snap effect, thereby providing the user with the appropriate feel when the parts are properly engaged. Variations on this roller and spring design, as will readily occur to those skilled in the art, will work equally well.

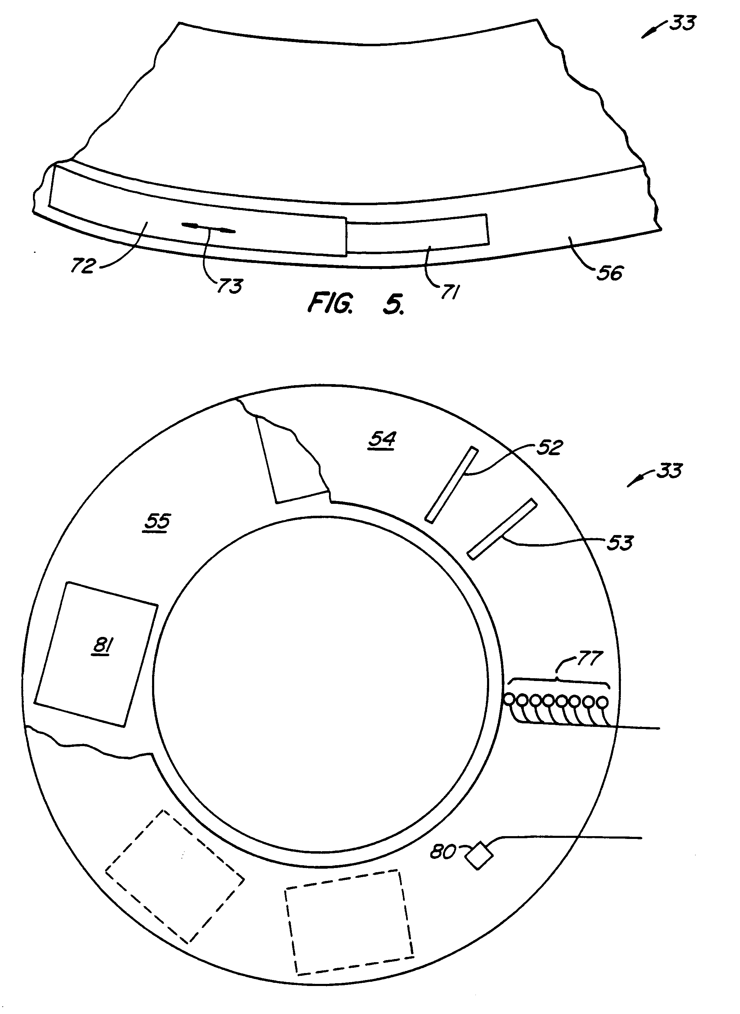

FIG. **5** shows the temperature controlled shell **33** in a perspective view. The peripheral wall **56** contains an opening **71** to permit the user to manually insert a reaction vessel (typically, a cassette with six microtiter strips) and slide the vessel into place on the carousel inside the shell. A periphery door **72** is secured to the peripheral wall by conventional means, in a manner permitting circumferential sliding in the direction of the arrow **73** for opening and closing.

The temperature controlled shell **33** is shown in a top view in FIG. **6**, with a portion of the upper plate **54** having been broken away to show the lower plate **55**. In this embodiment, the detection element **77** is mounted in the temperature controlled shell, and contains one set of parts for each of the eight wells in a single microtiter strip, arranged radially. These parts consist of eight individual light sources and emitting lenses mounted in the lower portion of the detection block **28** and eight individual collecting lenses and diodes mounted in the upper portion of the detection block **28**. Any emitting and sensing detection arrangement suitable for various applications would suffice.

The operation of the light sources and the diodes may be incorporated in a conventional photometric technique of detection. Returning to FIG. **1**, a typical photometric technique may involve the use of a suitable projector assembly **78** to supply photometric excitation to the light sources through a randomly dispersed multi-filament fiber-optic cable assembly **79**. The projector assembly **78** will be equipped with filters to limit the wavelength bandwidth as desired. The control unit **25** will include a reader for the detection signals, as well as the capability of varying the detection technique used in the detection units, and the capacity to accommodate components for multiple techniques in coexistence, used either simultaneously among different wells along a single microtiter strip or differentiating among adjacent microtiter strips.

Temperature monitoring is achieved by conventional elements, such as for example a single RTD thermocouple **80**, measuring 0.25 × 0.25 inch, mounted through a hole in the upper plate and bonded in place. Heating elements **81** are mounted on both the upper and lower plates. These may also be conventional elements. As one example, heating wires in silicone rubber casings measuring approximately 4 × 5 inches may be used, with four such elements on the upper plate and five on the lower plate. Temperature setpoints and controls may be incorporated into the control unit **25**.

As mentioned above, the control unit will also include a power supply for the instrument, a programmable controller which includes all timing and sequencing functions necessary for the operation of the instrument, components such as a keyboard and/or one or more disk drives for entering and/or modifying programs, and display or readout components such as a cathode ray tube, a printer, or both.

An optional feature of instruments in accordance with the present invention is the inclusion of a system for reading and storing information relating to the various assay reagents and reaction vessels, correlating each location on the carousels with the material occupying those positions, correlating the selection of a particular assay protocol with particular locations on the carousels, and displaying or printing out assay results in accordance with the patients to which they pertain.

Among many methods of achieving this, one method involves the placement of a machine-detectable code such as a barcode on each reaction vessel cassette and each reagent trough. The codes on the reagent tray may contain various fields, such as for example, fields with information regarding the biological species being assayed, the lot number of the reagent and the expiration date of the reagent. The codes on the reaction vessel cassette may contain similar information. The codes may be individually read with a manual wand or machine read, and this information is entered into the controller together with further information or instructions such as the type of assay to be performed. This additional information may be entered manually through a keyboard or other suitable means. Machine reading of codes may be performed for example at a reading station **82** (FIG. **1**) which is part of the instrument but outside the peripheries of the carousels. The reading station will contain an array of detectors arranged in a geometric pattern corresponding to the shape and arrangement of the receptacles bearing the codes to be read. Cables at the reading station will then transmit signals from these detectors to the control unit **25**, where the signals will be read and the information loaded into the control unit memory. Once this is done, the receptacles are placed in position on the appropriate carousels, and the assay proceeds with the results being read at the detection block. With the aid of the position information obtained both at the load station and on the carousel, the assay results are matched with the identities of the patient to which they pertain. This information is presented in correlated fashion on an appropriate display.

## Claims

1. An automated device for performing clinical assays, said device comprising:
a first carousel horizontally mounted in a housing for rotation about a vertical axis, said first carousel containing means thereon for supporting a plurality of receptacles for liquids;
a second carousel horizontally mounted in said housing for rotation about said vertical axis, said second carousel including a peripheral ring containing means for supporting a plurality of multi-well reaction vessels;
a temperature controlled shell within said housing surrounding said peripheral ring of said second carousel, and means to control temperature within said temperature controlled shell to a preset level;
liquid transfer means of at least one fixed angular position relative to said first and second carousels for drawing liquid from, and adding liquid to, receptacles supported in said first carousel and multi-well reaction vessels supported in said second carousel;
assay detection means at a further fixed angular position relative to said first and second carousels;
carousel rotating means for rotating said first and second carousels independently to place receptacles located at selected positions on said first carousel in alignment with said liquid transfer means, and to place multi-well reaction vessels located at selected positions on said second carousel in alignment with said liquid transfer means and said assay detection means; and
control means for coordinating said liquid transfer means, said assay detection means and said carousel rotating means in a programmed manner, to perform analyses of test liquids in multi-well reaction vessels supported in said second carousel using assay reagents in receptacles supported in said first carousel, and to detect the results of said analyses by said assay detection means.

2. An automated device in accordance with claim **1** in which said temperature controlled shell contains an opening to permit passage of a multi-well reaction vessel for placement on said second carousel.

3. An automated device in accordance with claim **1** in which said temperature controlled shell is comprised of an upper plate, a lower plate, a peripheral circumferential wall, and an opening in said peripheral circumferential wall to permit passage of a multi-well reaction vessel in said radial direction for insertion and removal of said multi-well reaction vessel on said second carousel.

4. An automated device in accordance with claim **1** in which said temperature controlled shell is comprised of an upper plate and a lower plate, and contains at least one opening in said upper plate to permit passage of said liquid transfer means.

5. An automated device in accordance with claim **1** in which said assay detection means is mounted inside said temperature controlled shell.

6. An automated device in accordance with claim **1** in which said first carousel is positioned above said second carousel.

7. An automated device in accordance with claim **6** in which said first carousel further contains at least one opening to permit access to said second carousel.

8. An automated device in accordance with claim **1** in which said liquid transfer means includes:
a plurality of transfer tubes mounted to said housing above said first and second carousel at a first angular position in a manner permitting axial movement of said tubes, said transfer tubes adapted for transfering liquids between said first and second carousels;
well washing means mounted to said housing above said second carousel at a second angular position in a manner permitting axial movement of said well washing means, said well washing means adapted for dispensing wash solution to, and aspirating liquid from, wells of multi-well reaction vessels in said second carousel;
transfer tube manipulation means for moving said transfer tubes axially; and
well washing manipulation means for moving said well washing means axially.

9. An automated device in accordance with claim **6** further containing a receptacle below said second carousel for waste liquid, and at least one opening in said second carousel to permit expulsion of waste liquid through said second carousel into said receptacle.

10. An automated device in accordance with claim **6** further containing a receptacle below said second carousel for waste liquid, and at least four openings in said second carousel to permit expulsion of waste liquid through said second carousel into said receptacle.
